# EUROPEAN PATENT APPLICATION

(11) **EP 4 699 769 A1**
(43) Date of publication of application: **25.02.2026**
(21) Application number: 24382924.9
(22) Date of filing: 22.08.2024
(51) Int. Cl.: B28B 1/00, B28B 13/02, B29C 67/24

(54) **SYSTEM, METHOD AND PLANT FOR THE MANUFACTURE OF VEINED ARTIFICIAL STONE**

(71) Applicant: Cosentino Research & Development, S.L., 04850 Cantoria, Almería (ES)
(72) Inventor: PÉREZ MENA, Diego, E-04850 Cantoria, Almeria (ES)
(74) Representative: ABG Intellectual Property Law, S.L.

(57) **Abstract**

The present disclosure falls in the field of materials for construction, decoration and architecture, made of artificial stone, and relates to artificial agglomerate materials or stones having chromatic effects and/or decorations, used as surfaces for counters, kitchen tops, sinks, shower trays, wall cladding, flooring, or the like. Particularly, the present disclosure relates to a system (1), a plant and a method for the manufacture of veined artificial stone. The system (1) comprises: an indenter (3) for creating at least one cavity (4) in a background mixture layer (2); automatic movement means (5) for translating the indenter (3) along a trajectory while it is inserted in the background mixture layer (2); and swinging means (6) for swinging the indenter (3) relative to a central position in a predetermined direction.

## Description

### FIELD OF THE DISCLOSURE

The present disclosure falls in the field of materials for construction, decoration, and architecture, made of artificial stone, and relates to artificial agglomerate materials or stones having chromatic effects and/or decorations, used as surfaces for counters, kitchen tops, sinks, shower trays, wall cladding, flooring, or the like. Particularly, the present disclosure relates to a system and a plant for the manufacture of veined artificial stone, and to a method for manufacturing veined artificial stone.

### BACKGROUND

Artificial stone in the form of slabs, tiles or sheets frequently simulates natural stones and is used in the construction, decoration, architecture, and design sectors. The common processes for manufacturing theses slabs, tiles or sheets at industrial scale are well established nowadays.

One of the most popular artificial stones, highly appreciated for their aesthetic, hardness and resistance to staining and wear, are surfaces of quartz, glass and/or mineral particles agglomerated with a binder. These artificial stone materials, which can be more precisely called artificial agglomerate stones, are extensively used for countertops, claddings, floorings, sinks and shower trays, among other applications. Offering superior performance, these materials represent an improved alternative to natural stones such as marble or granite in their traditional applications.

Artificial agglomerate stones can be made simulating colors and patterns found in natural stones or they might also have a totally artificial appearance, e.g., with plain bright red or fuchsia colors. The basis of their composition and the technology currently implemented for manufacturing the artificial agglomerate stones dates back from the late 1970s, as developed by the company Breton SpA, and which is nowadays commercially known in the sector under the name Bretonstone^{®}.

In order to simulate the appearance of some natural stones in artificial agglomerate stone materials, a frequent approach has been to use combinations of different types of pigmented mixtures, which are separately distributed on a surface or mold before compaction and hardening steps.

Different strategies have been described for the segregated distribution of the different pigmented mixtures. In some cases, as described in WO 2019101823 A1, a template might be used to create cavities in a layer of a first mixture, and then filling the cavities with a second mixture different from the first mixture. However, templates have the general problem that they only define one fixed pattern of cavities. Changing the pattern of veins in the artificial stone requires manufacturing a new template. Also, templates are large, expensive, and difficult to clean or replace.

In an alternative strategy, a tool can be used to mechanize a layer of a first mixture to create a furrow or a cavity, which is subsequently filled with a second mixture. Different types of mechanizing tools have been proposed. For example, in publications US 2019105800 A1, EP 3593968 A1, WO 2020115644 A1, EP4194167 A1, different mechanizing tools are described, configured as wheels or plows. However, these tools have important limitations, at least in that they have fixed shapes and cannot create cavities of different widths.

US11883979 B1 discloses a V-shaped apparatus for creating cavities in mixtures. The apparatus described includes a mechanism for varying the width of the cavity being created, by separating or approaching the elements forming the V-shape. This apparatus consists of multiple parts coming into contact with the mixture being mechanized, which would be difficult to clean and susceptible of getting blocked.

There is thus a need to provide improved systems and methods, which offer a solution to at least some of the drawbacks and shortcomings of the systems and methods previously known for manufacturing artificial stones with a veined effect from mixture layers.

### DESCRIPTION OF THE DISCLOSURE

The present disclosure provides a solution for the above-mentioned issues by a system for the manufacture of veined artificial stone according to claim 1, a plant for the manufacture of veined artificial stone according to claim 13 and a method for the manufacture of veined artificial stone according to claim 14. In dependent claims, embodiments of the different aspects of the disclosure are defined.

In a first aspect, the present disclosure provides a system for the manufacture of veined artificial stone from a background mixture layer. More specifically, the system is for creating cavities in the manufacture of veined artificial stone. The system according to the first aspect of the present disclosure comprises:
- an indenter for creating at least one cavity in the background mixture layer, wherein the at least one cavity extends through at least part of the thickness of the background mixture layer,
- automatic movement means for translating the indenter following a trajectory while the indenter is inserted in the background mixture layer, and
- swinging means for swinging the indenter relative to a central position in a predetermined direction.

Thanks to the combination of the translation and swinging of the indenter, among other advantages, the system of the first aspect of the present disclosure allows manufacturing veined artificial stones with improved flexibility in the shape and trajectory of the cavity being created.

Also, the cavity created by the system of the present disclosure has well compacted walls, thus avoiding wall crumbling and/or blurring of the boundary between the background mixture and an additional vein mixture to be dispensed into the cavity.

Advantageously, the system and the indenter used for creating the cavity are robust, easy to use, clean and maintain.

When the system is in use, in certain embodiments, the predetermined direction of swinging is configured to be substantially perpendicular to the thickness of the background mixture layer where the cavity is intended to be created.

In an embodiment, the system comprises a rotor and the swinging means comprise conversion means connected to the rotor and to the indenter, wherein the conversion means are configured for converting a rotational movement of the rotor into a swinging movement of the indenter.

In an embodiment, the rotor is mounted on the automatic movement means.

In an embodiment, the conversion means comprise:
- a rotating element comprising a shaft, wherein the rotating element is configured to fix a first end of the shaft in a part of the rotating element that is spaced from the rotation axis of the rotating element, wherein the rotating element is connected to the rotor, e.g. through connecting means and/or through a coupling shaft, so that when the rotor rotates, this rotation is transmitted to the rotating element, that rotates around its rotation axis and in turn generates a circular translation of the shaft;
- a connecting rod comprising a slot, wherein the slot is configured to receive a second end of the shaft of the rotating element opposite to the first end.

Since the shaft position in the rotating element is spaced from the rotation axis of the rotating element, the rotation of the rotating element around its rotation axis gives rise to a circular translation of the shaft. The second end of the shaft of the rotating element is mounted in the slot of the connecting rod, such that the second end of the shaft can be displaced inside said slot.

In an embodiment, the first end of the shaft of the rotating element is permanently fixed in the part of the rotating element that is spaced from the rotation axis of the rotating element. In another embodiment, the first end of the shaft of the rotating element is removably fixed to the part of the rotating element that is spaced from the rotation axis of the rotating element.

In an embodiment, the slot of the connecting rod is configured with an elongated shape, so that the circular translation of the shaft of the rotating element generates a swinging movement of the connecting rod.

In an embodiment, the conversion means comprise intermediate means for transferring the swinging movement of the connecting rod to the indenter. In a further embodiment the intermediate means comprise:
- a transfer shaft connected to the connecting rod and adapted to rotate with respect to its longitudinal axis in an oscillating movement when the rotating element rotates, and
- a holding rod extending from at least a first part to a second part of the holding rod, wherein the holding rod is connected to an end of the transfer shaft by the first part of the holding rod, wherein the second part of the holding rod is adapted to fix the indenter, wherein the holding rod is adapted to have a swinging movement that follows the swinging movement of the connecting rod when the rotating element rotates.

The transfer shaft serves to connect the holding rod with the connecting rod. When the rotor and rotating element are activated, the connecting rod undergoes a swinging movement, which is transmitted to the transfer shaft, resulting in the transfer shaft rotating with respect to its longitudinal axis in an oscillatory motion.

The oscillation of the transfer shaft is transmitted to the first part of the holding rod. In particular, the oscillation of the transfer shaft is transmitted to a connection point of the holding rod, which is located at the first part of the holding rod. The swinging movement of the holding rod is with respect to this connection point which is fixedly connected to one end of the transfer shaft that rotates with respect to its longitudinal axis in an oscillatory movement.

The indenter is fixedly mounted to the second part of the holding rod, resulting in both the indenter and the second part of the holding rod exhibiting the same swinging movement.

In an embodiment, the transfer shaft is configured and arranged in such a way that an end of the transfer shaft is connected to a part of the connecting rod. The opposite end of the transfer shaft is coupled with the first part of the holding rod.

In an embodiment, the system comprises connecting means adapted to connect the conversion means to the rotor. In an embodiment, the connecting means comprise a coupling shaft coupling the rotor and the rotating element. This coupling shaft is connected to the rotating element at the end opposite to the end where the coupling shaft is coupled to the rotor. When the rotor rotates, the coupling shaft rotates around its rotation axis and transmits the rotation from the rotor to the rotating element.

In an embodiment wherein the system comprises a rotor mounted on the automatic movement means and connecting means comprising a coupling shaft coupling the rotor and the rotating element, the indenter is coupled to the automatic movement means at least via the swinging means and the connecting means. In embodiments, the system may comprise additional or alternative means for coupling the indenter to the automatic movement means.

In an embodiment, the system comprises coupling means adapted to couple the indenter to the automatic movement means. In an embodiment, the coupling means are also adapted to allow the transmission of the rotation from the rotor to the conversion means. In particular, the coupling means are adapted to allow the transmission of the rotation from the rotor to the rotating element.

In an embodiment, the coupling means comprise an outer casing coupled to the swinging means and fixing means for fixing the outer casing to the automatic movement means.

In a particular embodiment, the coupling means, or its outer casing, has an elongated shape with a fixed outer surface, preferably cylindrical.

In a particular embodiment wherein the system comprises connecting means and coupling means, wherein the connecting means comprise a coupling shaft coupling the rotor and the rotating element and wherein the coupling means comprise an outer casing and fixing means, the outer housing comprises an internal space along its length, which allows for the passage of the coupling shaft that is coupled to the rotor and rotates with the rotational movement of the rotor. In this embodiment, the outer casing is coupled to the swinging means and to the automatic movement means, thus also coupling the indenter to the automatic movement means, while allowing the transmission of the rotation from the rotor to the conversion means.

The transfer shaft is arranged in a spatially fixed position in relation to the rotation axis direction of the coupling shaft. In an embodiment, the transfer shaft is oriented substantially parallel to the rotation axis of the coupling shaft of the connecting means. The longitudinal direction of the transfer shaft may also be perpendicular to the longitudinal directions of both the holding rod and the connecting rod. In this configuration, the swinging movement of the holding rod when in use is in a plane perpendicular to the longitudinal axis of the transfer shaft.

In an embodiment, the system comprises a protective cover adapted to enclose at least a portion of the connecting rod, the rotating element and part of the transfer shaft. In this embodiment, the transfer shaft is adapted to be located extending through an opening in the protective cover, from the connecting rod to the holding rod, in a way in which its displacement is blocked but it may rotate oscillating around its longitudinal axis.

In an embodiment, the system comprises a counterweight arranged at the end of the holding rod opposite to the end at which the indenter is fixed.

In other embodiments, the conversion means of the system may be any other type of mechanism that converts a rotational movement of the rotor into a swinging movement of the indenter.

In an embodiment, the rotor is configured to rotate at an adjustable speed. Advantageously, this allows the speed of the swinging movement of the indenter to be adjusted according to the needs of the user.

In an embodiment, the system comprises control means configured for controlling the swinging means and/or the automatic movement means.

In an embodiment, the control means are configured for any one of the following, or any combination of two or more of the following:
- controlling the activation and/or deactivation of the swinging means;
- controlling the speed of the swinging means;
- controlling the frequency and/or amplitude of the swinging means;
- controlling the position and/or speed of the automatic movement means;
- synchronizing the swinging means and the automatic movement means.

In a particular embodiment, the control means are configured for controlling the activation and/or deactivation of the swinging means. Thus, the control means command the activation and/or deactivation of the swinging means, for example according to predetermined parameters of a cavity to be created of a veined artificial stone.

In a particular embodiment, the control means are configured for controlling the speed of the swinging means. Thus, the control means command the speed of the swinging means, for example according to predetermined parameters of a cavity to be created of a veined artificial stone.

In a particular embodiment, the control means are configured for controlling the frequency and/or amplitude of the swinging movement. Thus, the control means control the frequency and/or amplitude of the swinging movement, for example according to predetermined parameters of a cavity to be created of a veined artificial stone.

In a particular embodiment, the control means are configured for controlling the position and/or speed of the automatic movement means. Thus, the control means control the position and/or speed of the automatic movement means, for example according to predetermined parameters of a cavity to be created of a veined artificial stone.

In a particular embodiment, the control means are configured for synchronizing the swinging means and the automatic movement means. Thus, the control means may command the synchronization of the swinging means and the automatic movement means, for example according to predetermined parameters of a cavity to be created of a veined artificial stone, for example to actuate simultaneously when creating at least part of at least one cavity.

In an embodiment, the control means are configured for controlling the automatic movement means such that the indenter follows a predetermined trajectory. Thus, the control means may command the trajectory to be followed by the indenter, for example according to the predetermined trajectory of a cavity to be created of a veined artificial stone.

In an embodiment, the indenter has a length in the range from 3 cm to 20 cm, or from 5 cm to 15 cm.

In an embodiment, the indenter has a width in the range from 3 cm to 20 cm, or from 5 cm to 15 cm.

In an embodiment, the indenter has a first end portion intended to be inserted first into the background mixture layer when in use. In an embodiment, the first end portion has the smallest thickness compared to other portions of the indenter. In an embodiment, the indenter has a first end portion with a sharp edge.

In an embodiment, the thickness of the indenter in its thickest portion is in the range from 1 mm to 40 mm, or from 1 mm to 30 mm.

In an embodiment, the length of the indenter is in the range from 2 times to 5 times the thickness of the indenter at the thickest portion of the indenter.

The thickness of the indenter may vary along the length and/or the width of the indenter.

In an embodiment, the indenter is configured with an edge in the first end portion, the edge having a smaller thickness than other parts of the indenter. When in use, the first end portion of the indenter is inserted first into the background mixture. In an embodiment, the indenter has a second end portion, the second end portion being the part of the indenter most distal to the first end portion. In an embodiment, the second end portion is the part of the indenter having the broadest thickness. Advantageously, this configuration facilitates the insertion of the indenter into the background mixture and also helps to shape the opposed walls of the cavity being created with a, more or less subtle, V-shape.

In an embodiment, the edge of the indenter intended to be inserted first into the background mixture layer has a thickness in the range from 1 to 10 mm. In an embodiment, the second end portion of the indenter has a thickness in the range from 15 to 40 mm.

In an embodiment, the material of the indenter is a low adherence plastic, such as nylon, or any other material resistant to and compatible with the background mixture.

In an embodiment, the surfaces of the indenter are smooth. In another embodiment, the surfaces of the indenter are configured to have an embossment, profile or texture. The embossment, profile or texture can be used to generate walls of the cavity with a certain relief, which would result in novel visual veined effects in the artificial stone being manufactured.

In an embodiment, the system comprises means for adjusting the amplitude of the swinging movement of the indenter. In some embodiments, the means for adjusting the amplitude are controlled automatically or manually.

In an embodiment, the means for adjusting the amplitude of the swinging movement of the indenter are controlled automatically by control means.

In an embodiment where the swinging means comprise conversion means comprising a rotating element and a connecting rod, the conversion means comprise means for adjusting the amplitude of the swinging movement of the indenter; wherein the means for adjusting the amplitude of the swinging movement of the indenter comprise a mechanism configured for adjusting the position of the shaft of the rotating element relative to the rotation axis of the rotating element, and a blocking element configured for blocking the position of the shaft.

Accordingly, the mechanism for adjusting the amplitude of the swinging movement of the indenter operates by modifying the position of the shaft of the rotating element relative to the rotation axis of the rotating element at a requisite position. This position is selected according to the required amplitude of the swinging movement of the indenter for a specific operation of the system. The blocking element operates by blocking the desired position of the shaft for a specific operation of the system.

In an embodiment, the mechanism configured for adjusting the position of the shaft of the rotating element relative to the rotation axis of the rotating element comprises a slot formed in the rotating element. This slot allows the shaft to be positioned and fixed in a variety of positions along the length of the slot.

In an embodiment, the indenter is coupled to the automatic movement means, such as by coupling means, so that the automatic movement means may insert and/or extract the indenter in and/or out of the background mixture layer, and/or translate the indenter following a predetermined trajectory through the background mixture layer.

In an embodiment, the automatic movement means are embodied by a robotic device, such as a robotic arm (for example an anthropomorphic robotic arm) or a Cartesian robot (such as an XYZ Cartesian robot).

In an embodiment, the indenter is removably arranged in the system, thus allowing easy replacement when changing patterns and/or mixtures for the manufacture of different artificial stones. In a particular embodiment, the indenter is removably arranged in the system by the provision of a removable coupling at the end of the transfer shaft opposite to the end that is connected to the holding rod. Consequently, in this particular embodiment, the set comprising the indenter, the holding rod and optionally the transfer shaft can be removed from the system together if desired. In another embodiment, the indenter is removably arranged in the system by the provision of a removable coupling at the end of the holding rod where the indenter is coupled.

Advantageously, by using indenters of different shapes and/or configurations, different vein effects can be achieved, and the pattern of veins or vein effects in the artificial stone can be quickly and straightforwardly modified, e.g. by controlling and/or adjusting (such as by programming) different trajectories of the indenter as translated by the automatic movement means, and/or by controlling and/or adjusting the amplitude and/or the speed of the swinging movement.

In an embodiment, the system comprises one or more tool changers for ease coupling and uncoupling of one or more elements of the system. For example, in an embodiment, the system comprises a tool changer that couples the transfer shaft to the connecting rod and/or a tool changer that couples the indenter to the holding rod.

In a second aspect, the present disclosure provides a method for the manufacture of veined artificial stone, the method comprising the following steps:
- dispensing a background mixture to create a background mixture layer having a thickness;
- creating at least one cavity in the background mixture layer, wherein the at least one cavity extends through at least part of the thickness of the background mixture layer;
- dispensing a vein mixture into the at least one cavity; and
- compacting and hardening the combination of background mixture and vein mixture;
wherein the at least one cavity is created by translating an indenter following a trajectory while the indenter is inserted in the background mixture layer, while the indenter is simultaneously swung relative to a central position in a direction substantially perpendicular to the thickness of the background mixture layer.

The method of the second aspect of the present disclosure allows manufacturing veined artificial stones more efficiently, with the additional benefit of improved flexibility in the shape and trajectory of the cavity being created.

In an embodiment, the step of creating at least one cavity is performed with the system according to any of the embodiments of the first aspect of the present disclosure.

In an embodiment, the indenter is swung repeatedly.

The swinging movement of the indenter defines an amplitude. The amplitude shall be understood as the distance along the swinging direction between the free ends of the indenter in its most extreme positions during the swinging movement.

In an embodiment, the indenter is swung with an amplitude in the range from 20 mm to 100 mm, or from 30 mm to 80 mm, while creating at least part of the cavity.

The swinging movement involves the whole indenter (and not just a part of it) displacing relative to the central position.

The indenter may be swung with a variable or a substantially constant swinging amplitude.

Advantageously, by varying the amplitude of the swinging movement, vein effects wider or thinner can be achieved, as desired. In some embodiments, the amplitude may be varied for different vein effects or for different artificial stones, or it may be varied while the cavity is being created, thus creating a vein effect with different widths along its trajectory.

In an embodiment, the indenter is swung repeatedly, at a certain speed, while creating at least part of the cavity. The frequency of the swinging movement of the indenter shall be understood as the number of cycles of the indenter, in its swinging movement, per unit of time. A cycle is completed when the indenter moves from the central position forth to one extreme position and back to the opposed extreme position, and then returns to the central position.

The indenter may be swung with a variable or a substantially constant swinging frequency. In an embodiment, the frequency is in the range from 2 s⁻¹ to 10 s⁻¹ while creating at least part of the cavity.

In an embodiment, the background mixture layer has a shape of a slab corresponding to the shape of the artificial stone being manufactured, optionally with some excess in its dimensions to compensate for the shrinkage that may be produced during compacting and hardening. The dispensed background mixture layer has an average thickness, understood as the average of the thicknesses in at least five separated regions of the background mixture layer. In embodiments, the background mixture layer has a generally homogeneous thickness along its length and width. In embodiments, the background mixture layer has a non-homogeneous thickness along its length and width.

In an embodiment, the length of the background mixture layer is in the range from 2 m to 3.5 m, and/or its width is in the range from 0.8 m to 2 m. In an embodiment, the average thickness of the background mixture layer is in the range from 10 mm to 200 mm, or from 15 mm to 100 mm.

In an embodiment, the background mixture is dispensed on a supporting surface, such as a sheet of kraft paper or plastic, which can be arranged on top of a conveyor or other (e.g. horizontal) part of a production line.

In an embodiment, the supporting surface is part of a temporary mold, for instance the bottom of a tray-shaped mold, which is used to retain the background mixture layer during the manufacturing of the artificial stone.

In an embodiment, the background mixture is prepared by mixing from 82 to 95 wt% of a first particulate material and from 5 to 18 wt% of a first binder, both in relation to the weight of the background mixture.

In an embodiment, the background mixture comprises different amounts of granulates and/or powders, having different particle sizes, of one or several of: quartz, synthetic cristobalite, feldspar and silicate glass.

The term "binder" is understood in the art and hereby refers to a component that performs the function of holding together a particulate material or "filler" to form the artificial agglomerated material. The binder is unhardened or uncured when mixed with the particulate material, and it is subsequently hardened or cured to produce a hardened binder which gives cohesion and mechanical strength to the artificial agglomerated material.

In an embodiment, the first binder comprises a liquid translucent unsaturated polyester resin.

In an embodiment, the background mixture comprises from 0.5 wt% to 3.0 wt% of a first colorant mixture and/or additives comprising one or more of coupling agents, catalysts, accelerants, among others.

The cavity, such as a groove, furrow, or trench, is created extending at least through part of the thickness of the background mixture layer. The cavity may extend only through part of the thickness of the background mixture layer or through the whole thickness of the background mixture layer. The cavity may have different depths along the trajectory.

The cavity will be created having a shape and following a trajectory corresponding, with some variation due to the processes downstream in the method of manufacture, to the shape and trajectory of the vein, or veined effect, to be achieved in the artificial stone. In this context, a vein is understood as an elongated line or band visually distinguishable from a background.

In some embodiments, more than one cavity is created in the background mixture, such as from 2 to 20 cavities, intersecting or not, forming complex or simple patterns.

In an embodiment, the vein mixture comprises from 85 wt% to 95 wt% of a second particulate material and from 5 wt% to 15 wt% of a second binder, both based on the weight of the vein mixture.

In an embodiment, the second particulate material comprises different amounts of granulates and/or powders, having different particle sizes, of one or several of quartz, synthetic cristobalite, feldspar and recycled silicate glass.

In an embodiment, the second binder comprises a liquid translucent unsaturated polyester resin.

In an embodiment, the vein mixture comprises from 0.5 wt% to 3.0 wt% of a second colorant mixture and/or additives comprising coupling agents, catalysts, accelerants, among others, based on the weight of the vein mixture.

In a third aspect, the present disclosure provides a plant for the manufacture of veined artificial stone, wherein the plant comprises at least one system according to any of the embodiments of the first aspect of the present disclosure.

In an embodiment, the plant is configured for implementing the method according to any of the embodiments of the second aspect of the present disclosure.

In an embodiment, the plant according to the third aspect of the present disclosure comprises:
- a background mixture dispenser,
- a vein mixture dispenser,
- a compacting press, and
- hardening means.

The background mixture dispenser is configured for dispensing a background mixture to create a background mixture layer that has a thickness.

The vein mixture dispenser is configured for dispensing a vein mixture. In an embodiment, the vein mixture dispenser is configured for dispensing a vein mixture into at least one cavity created in the background mixture layer, for instance, in a way that the vein mixture is dispensed predominantly, or exclusively, into the cavities. In an embodiment, the vein mixture dispenser is mounted on a robotic device, thus allowing precise control of the dispensing of the vein mixture into the at least one cavity created in the background mixture layer.

The compacting press is configured for compacting the combination of background mixture and vein mixture. In an embodiment, the compacting press is a vacuum vibrocompacting press.

The hardening means is configured for hardening the combination of background mixture and vein mixture. In an embodiment, the hardening means comprises heating and/or irradiating means. In an embodiment, the hardening means comprises a hardening kiln or a curing oven. In an embodiment the hardening means comprises a source of UV-radiation.

In an embodiment, the plant also comprises calibrating, trimming, polishing, honing and/or brushing devices for providing the artificial stone with the desired finish.

Unless specifically stated otherwise, or unless they are clearly incompatible, all the embodiments disclosed in relation to an aspect of the disclosure are also applicable to the other aspects. It should be understood that the scope of the present disclosure includes all the possible combinations of embodiments disclosed herein, either belonging to the same aspect or to different aspects of the disclosure.

### DESCRIPTION OF THE DRAWINGS

These and other features and advantages of the disclosure will be seen more clearly from the following detailed description of certain embodiments provided only by way of illustrative and non-limiting examples in reference to the attached drawings.
Figure 1 shows a schematic perspective view of an embodiment of the system of the present disclosure.
Figure 2 shows a schematic perspective view of part of the elements of an embodiment of the system of the present disclosure.
Figure 3 shows a schematic down-top view of the indenter according to an embodiment of the present disclosure.
Figures 4a-4b show schematic side and front views of the indenter with the holding rod according to an embodiment of the present disclosure.
Figures 5a and 5b show two different schematic perspective views of the means for swinging the indenter according to an embodiment of the present disclosure. Figure 5c shows a schematic front view of the means for swinging the indenter according to the same embodiment as Figures 5a and 5b of the present disclosure.
Figures 6a-6d depict some stages of the creation of a cavity in the background mixture layer according to an embodiment of the method of the present disclosure.

### DETAILED DESCRIPTION OF THE DISCLOSURE

The present disclosure provides a system (1) for the manufacture of veined artificial stone from a background mixture layer (2).

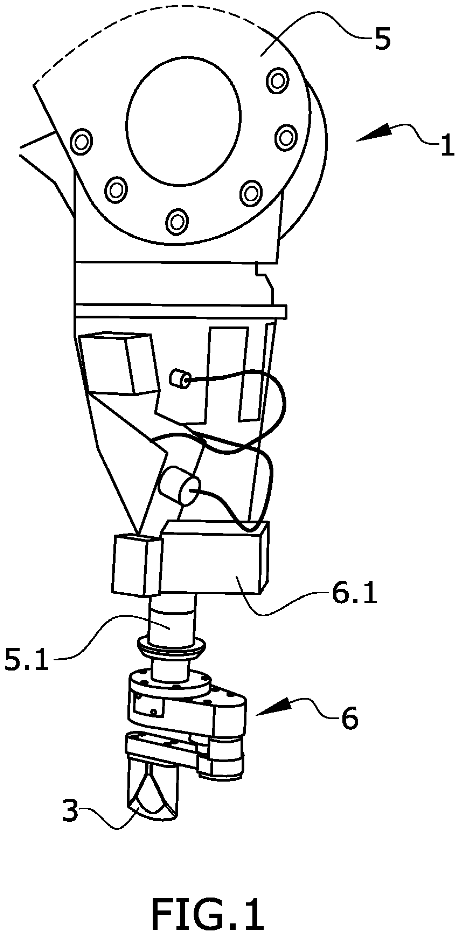

Figure 1 shows a system (1) according to an embodiment of the disclosure. The system (1) for the manufacture of veined artificial stone comprises:
- an indenter (3) for creating at least one cavity (4) in the background mixture layer (2), wherein the at least on cavity (4) extends through at least part of the thickness (h) of the background mixture layer (2),
- automatic movement means (5) for translating the indenter (3) following a trajectory while the indenter (3) is inserted in the background mixture layer (2), and
- swinging means (6) for swinging the indenter (3) relative to a central position in a predetermined direction.

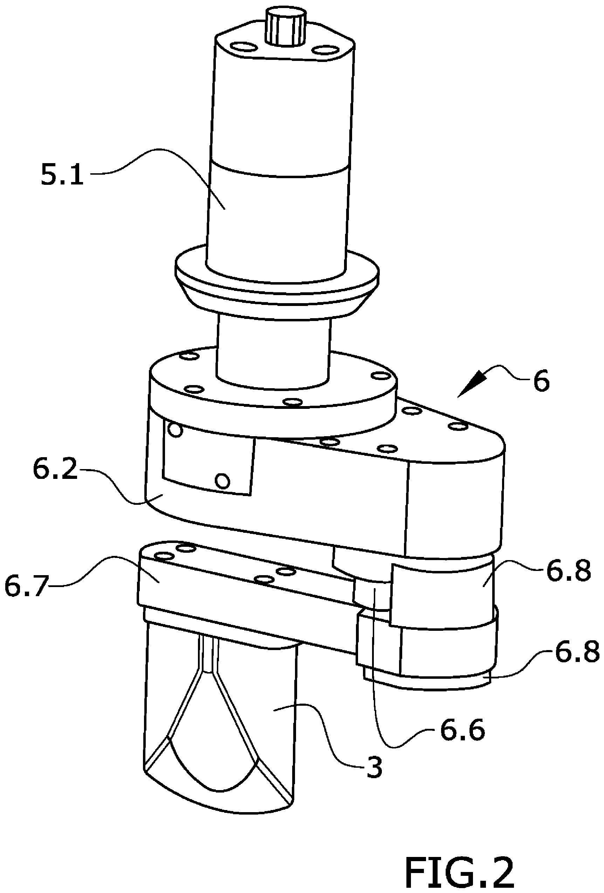

The indenter (3) and the swinging means (6) of the system (1) are also visible in Figure 2, which shows some elements of the system (1) of the present disclosure. In Figure 2, the automatic movement means (5) are not shown.

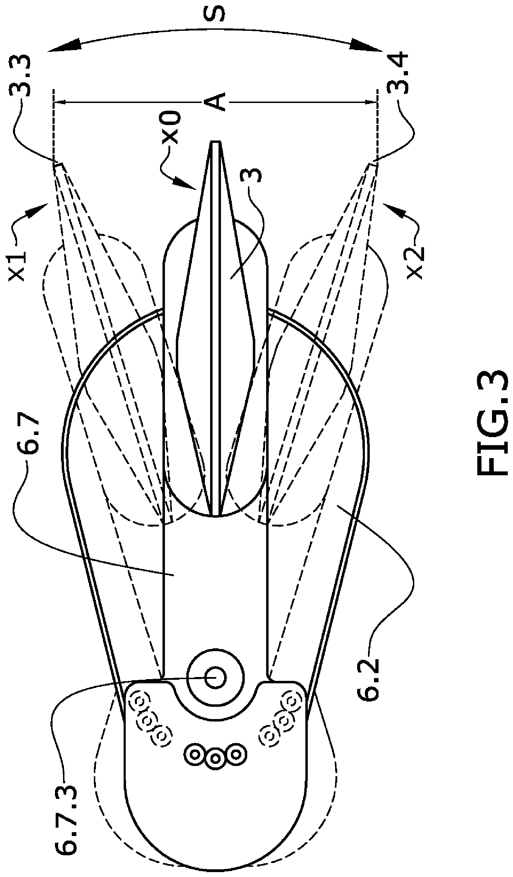

When the system (1) is in use, the indenter (3) is configured to be inserted into the background mixture layer (2) and the automatic movement means (5) are configured for translating the indenter (3). Also, the swinging means (6) are configured for swinging the indenter (3) through a central position (x0) in a predetermined direction (S). In an embodiment, when the system (1) is in use, the predetermined direction (S) of swinging is configured to be substantially perpendicular to the thickness (h) of the background mixture layer (2) where the cavity (4) is intended to be created. When the background mixture layer is positioned substantially horizontally, the thickness of the background mixture layer is substantially vertical and the direction (S) of the swinging movement is contained in the horizontal plane. Figure 3 schematically shows an embodiment of the swinging movement of the indenter (2) with an amplitude (A) between the most extreme positions (x1, x2) depicted in dashed line. The central position (x0) of the indenter (3) is also shown. In these embodiments, the swinging means (6) are configured for swinging the whole body of the indenter (3) (and not just part of it) through the central position (x0).

In order to create the cavity (4), the indenter (3) is inserted by the automatic movement means (5) into at least a part of the thickness (h) of the background mixture layer (2), and by translating the indenter (3) following the desired trajectory, while the indenter (3) is simultaneously swung relative to a central position (x0) in a predetermined direction (S), for example the direction (S) shown in Figure 3. The insertion of the indenter (3) into the background mixture layer (2) and the activation of the swinging movement can be performed in any order and also simultaneously. For example, the indenter (3) may be first inserted into the background mixture layer (2) and then the swinging movement activated, or alternatively, the swinging movement may be started first and then the indenter (3) inserted. By controlling the displacement and the swinging movement of the indenter (3), a cavity (4) is formed having a shape and following a trajectory that corresponds, with some variation due to the processes downstream in the manufacturing of the artificial stone, to the shape and trajectory of the vein, or veined effect, to be achieved in the artificial stone.

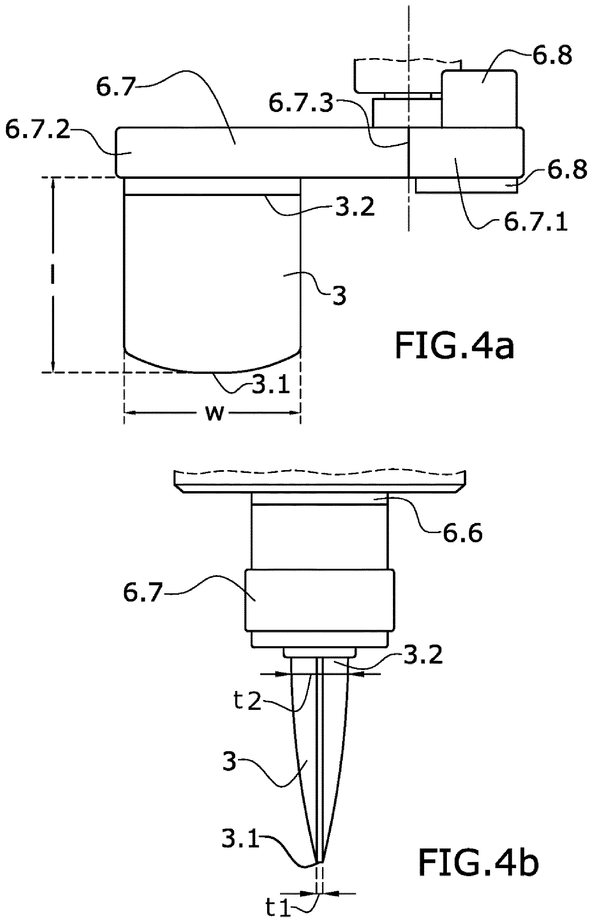

Figures 4a-4b show schematic perspective views of the indenter (3) according to an embodiment of the present disclosure. In these figures, an indenter (3) is shown having a length (I), a width (w) and a thickness.

In an embodiment, the indenter (3) has a length (I) and/or a width (w) in the range from 3 cm to 20 cm, or from 5 cm to 15 cm.

In the embodiment shown, the indenter (3) comprises a first end portion (3.1) which is intended for insertion first into the background mixture layer (2), and a second end portion (3.2) being the most distal part of the indenter (3) in relation to the first end portion (3.1). In the embodiment shown, the thickness of the indenter (3) varies along the length (I) and along the width (w) of the indenter (3). In this depicted embodiment, the indenter (3) is configured with an edge in the first end portion (3.1), the edge having a smaller thickness (t1) than other parts of the indenter (3). As visible, in this embodiment, the second end portion (3.2) is the part of the indenter (3) having the broadest thickness (t2). Advantageously, this configuration facilitates the insertion of the indenter (3) into the background mixture, in addition to helping shaping the opposed walls of the cavity being created with a, more or less subtle, V-shape.

In an embodiment, the thickness of the indenter (3) in its thickest portion is in the range from 1 mm to 40 mm, or from 1 mm to 30 mm.

In an embodiment, the first end portion (3.1) of the indenter (3) intended to be inserted first into the background mixture layer (2) has a thickness (t1) in the range from 1 to 10 mm. In an embodiment, the second end portion (3.2) of the indenter (3) has a thickness (t2) in the range from 15 to 40 mm.

In an embodiment, the length (I) of the indenter (3) is in the range from 2 times to 5 times the thickness of the indenter (3) at the thickest portion of the indenter (3).

In an embodiment, the material of the indenter (3) is a low adherence plastic, such as nylon, or any other material that is resistant to and compatible with the background mixture. In the embodiment shown in Figures 4a-4b, the surfaces of the indenter (3) are smooth. In other embodiments (not shown), the surfaces of the indenter (3) are configured to have one or more embossments, profiles or textures. The embossment, profile and/or texture can be used to generate walls of the cavity (4) with a certain relief, which would result in novel visual veined effects in the artificial stone being manufactured.

In an embodiment, the automatic movement means (5) are embodied by a robotic device (5), such as a robotic arm (such as an anthropomorphic robotic arm) or a Cartesian robot (such as an XYZ Cartesian robot). The indenter (3) is coupled to the automatic movement means (5), so that the automatic movement means (5) may insert and/or extract the indenter (11) into and/or out of the background mixture layer (2), and/or translate the indenter (3) following a predetermined trajectory through the background mixture layer (2).

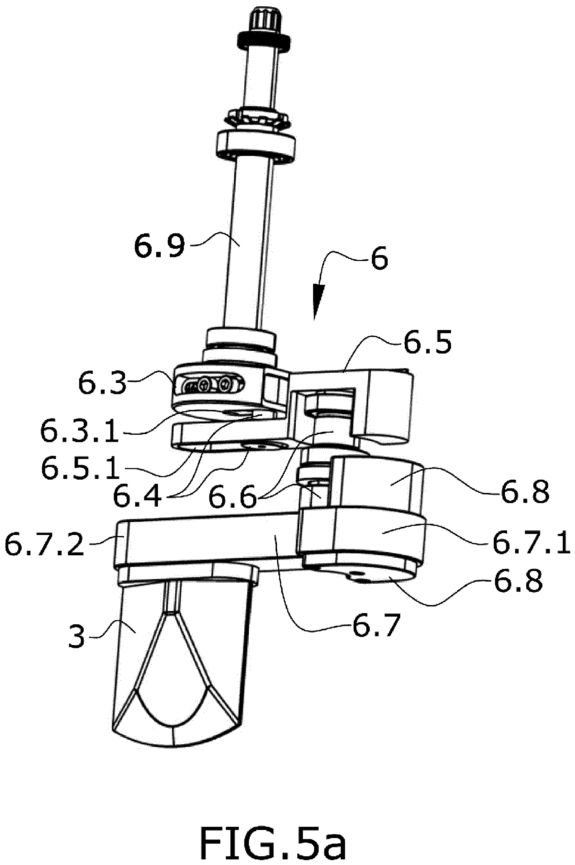

In an embodiment, the system (1) comprises a rotor (6.1) coupled to an electric motor (not shown). The rotor (6.1) may be mounted on and carried by the automatic movement means (5), as shown in Figure 1. In an embodiment, the speed of the rotor (6.1) is suitably adjustable. In the embodiment shown in Figure 5a-c, the swinging means (6) comprise conversion means connected to the rotor (6.1) and to the indenter (3), wherein the conversion means are configured for converting the rotational movement of the rotor (6.1) when the rotor (6.1) is in use into a swinging movement of the indenter (3).

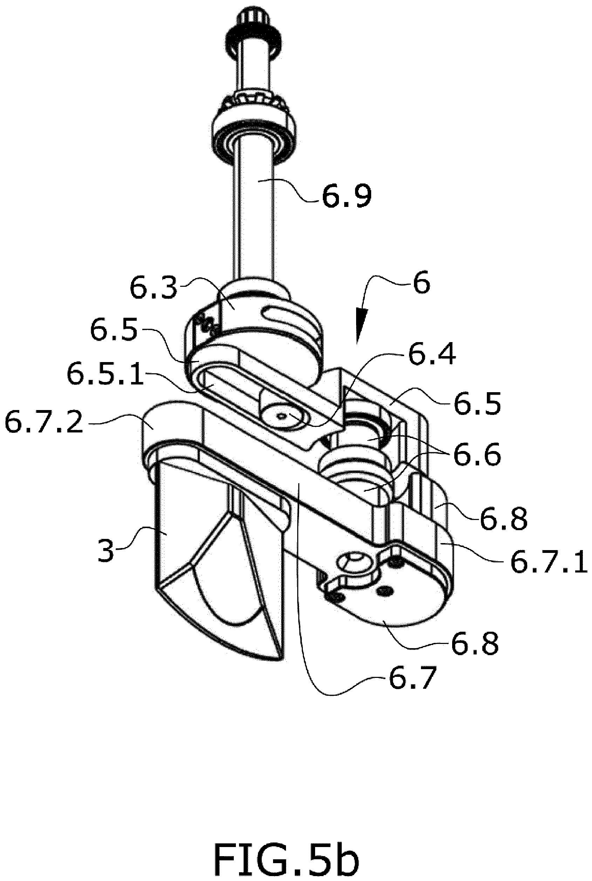

In Figures 5a and 5b a protective cover (6.2) of the system (1), which is visible in Figure 2, has been eliminated to be able to clearly show the interior components of the conversion means housed within the protective cover (6.2). In this embodiment, the conversion means comprise:
- a rotating element (6.3) comprising a shaft (6.4), and
- a connecting rod (6.5) comprising a slot (6.5.1).

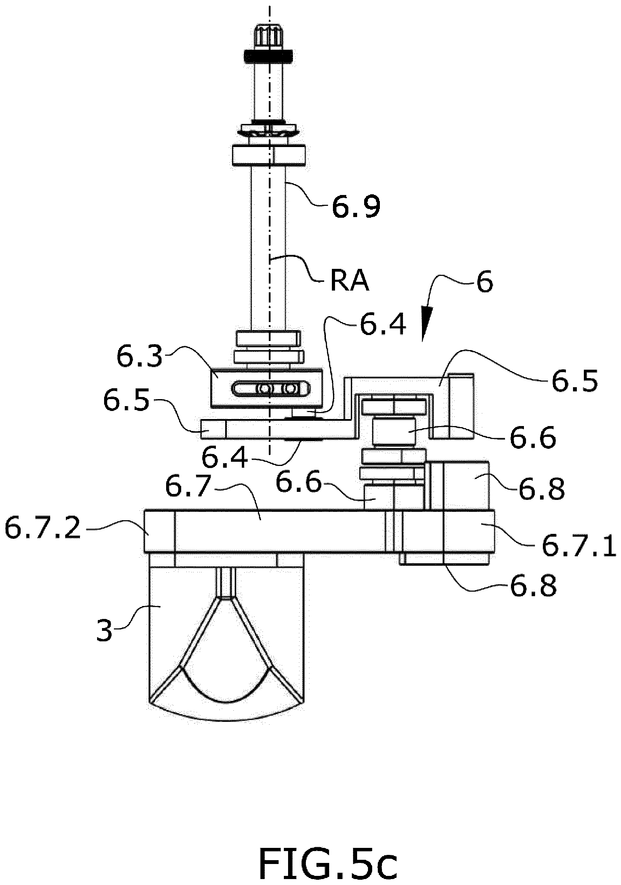

The rotating element (6.3) with a shaft (6.4) is configured to fix a first end of the shaft (6.4) in a part of the rotating element (6.3) that is spaced from the rotation axis (RA) of the rotating element (6.3). In other words, the rotating element (6.3) has a cross-section with a geometrical centre or rotation axis (RA) that is distanced from the first end of the shaft (6.4), see Figure 5c. The rotating element (6.3) is connected or coupled to the rotor (6.1) so that when the rotor (6.1) rotates, this rotation is transmitted to the rotating element (6.3) that rotates around its rotation axis (RA) and in turn generates a circular translation of the shaft (6.4).

The slot (6.5.1) of the connecting rod (6.5) is configured to receive a second end of the shaft (6.4) of the rotating element (6.3) opposite to the first end.

As shown in Figure 5c, in an embodiment, the shaft (6.4) of the rotating element (6.3) is positioned in a parallel orientation with respect to the rotation axis (RA) of the rotating element (6.3). Additionally, at least a portion of the connecting rod (6.5) where the slot (6.5.1) is arranged is mounted in a parallel orientation with respect to the rotating element (6.3). Consequently, the shaft (6.4) of the rotating element (6.3) is positioned at a right angle to both the rotating element (6.3) and at least a portion of the connecting rod (6.5).

In an embodiment, the system (1) comprises connecting means adapted to connect the conversion means to the rotor. In the embodiment shown in Figures 5a to 5c, the connecting means comprise an elongated coupling shaft (6.9) arranged such that it extends along a first direction. The coupling shaft (6.9) is coupled at one end to the rotor (6.1) and at the other end to the rotating element (6.3). When the rotor (6.1) rotates, the coupling shaft (6.9) rotates around its rotation axis and transmits the rotation from the rotor (6.1) to the rotating element (6.3). Thus, the rotating element (6.3) is connected to the rotor (6.1) via the coupling shaft (6.9).

In Figures 1 and 2, the system (1) comprises coupling means adapted to couple the indenter to the automatic movement means. In this embodiment the coupling means comprise an outer casing (5.1) coupled to the swinging means (6) and fixing means (not shown) for fixing the outer casing to the automatic movement means. The interior of the outer casing (5.1) contains the coupling shaft (6.9) of the connecting means, which is visible in Figures 5a to 5c. In Figures 5a to 5c, the outer casing (5.1) of the coupling means which is shown in Figures 1 and 2, has been removed to show the coupling shaft (6.9) in the form of a rotating shaft.

In the embodiment shown in Figures 5a to 5c, the rotating element (6.3) has a substantially cylindrical shape.

In the embodiment shown in Figures 5a to 5c, the rotating element (6.3) is arranged in such a way that its rotation axis (RA) is aligned with the axis of the coupling shaft (6.9) of the connecting means; in other words, they are parallel. The shaft (6.4) of the rotating element (6.3) is arranged spaced from the rotation axis of the rotating element (6.3) and extends along a direction that is parallel to the first direction in which the coupling shaft (6.9) extends.

In the embodiment shown in Figures 5a to 5c, when the swinging means (6) are in use, the rotating element (6.3) is connected to the rotor (6.1) via the coupling shaft (6.9), such that the rotation of the rotor (6.1) and the coupling shaft (6.9) is transmitted to the rotating element (6.3) which rotates around its rotation axis (RA) and consequently generates a circular translation of the shaft (6.4) due to the shaft (6.4) being spaced from the rotation axis (RA) of the rotating element (6.3). The shaft (6.4) is configured to be inserted within a slot (6.5.1) provided in the connecting rod (6.5). The slot (6.5.1), in this embodiment an elongated slot, is visible in Figures 5a and 5b. The shaft (6.4) is mounted in the slot (6.5.1) such that it can be displaced along said slot (6.5.1).

The connecting rod (6.5) in this embodiment has an elongated shape with two substantially parallel portions at different heights, connected by a connecting portion, see Figure 5c. The elongated shape of the connecting rod (6.5) extends along a principal direction, designated as second direction, which is perpendicular to the first direction in which the coupling shaft (6.9) extends. In one of the two parallel portions, the slot (6.5.1) being configured as an elongated through slot is provided for the location of one end of the shaft (6.4) of the rotating element (6.3), wherein the elongated through slot (6.5.1) also extends in the second direction. Thus, the circular translation of the shaft (6.4) of the rotating element (6.3) generates a swinging movement of the connecting rod (6.5).

In an embodiment, the swinging movement of the connecting rod (6.5) is then transferred to the indenter (3). This can be done, for example, by means of the provision of intermediate means comprising a transfer shaft (6.6) and a holding rod (6.7). The transfer shaft (6.6) is arranged, in this embodiment, with its main or longitudinal direction parallel to the first direction of the coupling shaft (6.9). The holding rod (6.7) extends from a first (6.7.1) to a second (6.7.2) part of the holding rod (6.7). The holding rod (6.7) is connected at the first part (6.7.1) of the holding rod (6.7) to an end of the transfer shaft (6.6). In an embodiment, the longitudinal direction of the holding rod (6.7) is arranged substantially parallel to the longitudinal direction of the connecting rod (6.5), see Figure 5c. The second part (6.7.2) of the holding rod (6.7) is adapted to fix the indenter (3). The transfer shaft (6.6) is configured and arranged such that when the swinging means are in use, the holding rod (6.7) follows the swinging movement of the connecting rod (6.5).

In this embodiment shown in Figures 5a to 5c, the longitudinal direction of the transfer shaft (6.6) is in a spatially fixed position with respect to the coupling shaft (6.9), where both the longitudinal direction of the transfer shaft (6.6) and the first direction of the coupling shaft (6.9) are configured to be parallel. One end of the transfer shaft (6.6) is fixed to a part of the connecting rod (6.5), while the opposite end of the transfer shaft (6.6) is coupled with a first part (6.7.1) of the holding rod (6.7). The transfer shaft (6.6) is held in a spatially fixed position with respect to the first direction (i.e. longitudinal direction) of the coupling shaft (6.9) by the transfer shaft (6.6) being arranged extending through an opening (not shown) of the protective cover (6.2) configured for this purpose. Thus, the displacement of the transfer shaft (6.6) is blocked, but the oscillating rotation of the transfer shaft (6.6) around its longitudinal axis is not impeded. Therefore, the transfer shaft (6.6) oscillates around its longitudinal axis when the rotating element (6.3) is activated, so that the holding rod (6.7) to which end part the indenter (3) is fixed follows the swinging movement of the connecting rod (6.5).

In the embodiment shown in Figures 5a to 5c, the holding rod (6.7) is configured with a substantially elongated shape extending at least from the first (6.7.1) to the second part (6.7.2).

In the embodiment shown in Figures 5a to 5c, the transfer shaft (6.6) is configured to extend from the connecting rod (6.5) to the holding rod (6.7) passing through an opening (not shown) in the protective cover (6.2). One end of the transfer shaft (6.6) is connected to the first part (6.7.1) of the holding rod (6.7) at one connection point (6.7.3) of the holding rod (6.7), shown in Figure 3. In particular, the connection point (6.7.3) is located in the first part (6.7.1) of the holding rod (6.7) but separated from the end of the holding rod (6.7) (see Figure 3) opposite to the end where the indenter (3) is fixed. A counterweight (6.8) is provided in the space between the connection point (6.7.3) and the end of the holding rod (6.7) opposite to the end where the indenter (3) is fixed. A discontinuous line is drawn in figure 4a to illustrate the longitudinal axis of the transfer shaft (6.6), around which it can be rotated in an oscillation movement.

In the embodiment shown in Figures 5a to 5c, as indicated previously, the connecting rod (6.5) is positioned above the holding rod (6.7) - relative to the background mixture layer (2) when in use - and the connecting rod (6.5) and the holding rod (6.7) are positioned such that their longitudinal directions are perpendicular to the longitudinal direction of the transfer shaft (6.6). In other words, the connecting rod (6.5) is arranged within the system in a manner that the connecting rod (6.5) extends along a main direction that is included in a first plane. Meanwhile, the holding rod (6.7) is arranged in the system in such a way that it extends at least from a first part to a second part along a direction that is included in a second plane that is parallel to the first plane. Finally, the transfer shaft (6.6) is arranged in a perpendicular arrangement with respect to the first and second planes. The arrangement of the connecting rod (6.5) and the holding rod (6.7) in parallel planes within the system is illustrated in the figures.

The indenter (3) is fixedly mounted to the holding rod (6.7), and specifically in a second part (6.7.2) of the holding rod (6.7) and at the opposite side to which the transfer shaft (6.6) is connected. Thus, the indenter (3) and the holding rod (6.7) follow the swinging movement. Figure 3 illustrates the swinging movement of the holding rod (6.7) together with the indenter (3) with respect to the connection point (6.7.3) located in the first part (6.7.1) of the holding rod (6.7).

In an embodiment, the system (1) comprises means for adjusting the amplitude (A) of the swinging movement of the indenter (3). These means for adjusting the amplitude (A) of the swinging movement (not shown), in the embodiment depicted in Figure 5, may be embodied by a mechanism (e.g. arranged in the rotating element (6.3)) allowing to move (e.g. by sliding) the shaft (6.4) closer to or away from the rotation axis (RA) of the rotating element (6.3), so that the radius of the circular translation of the shaft (6.4) is enlarged or decreased. Thereby, the amplitude (A) of the swinging movement of the connecting rod (6.5) and ultimately the indenter (3) may be enlarged or decreased, respectively. For example, the mechanism configured for adjusting the position of the shaft (6.4) relative to the rotation axis (RA) of the rotating element (6.3) may be a slot (6.3.1) incorporated into the rotating element (6.3), which allows for the fixation of varying positions of the shaft (6.4) along the length of the slot (6.3.1). Figure 5a depicts an example of such a slot (6.3.1).

In an embodiment, the system (1) comprises control means (not shown) configured for controlling the swinging means and/or the automatic movement means.

In an embodiment, the control means are configured for one or more of the following:
- controlling the activation and/or deactivation of the swinging means (6);
- controlling the speed of the swinging means (6);
- controlling the frequency and/or amplitude (A) of the swinging means;
- controlling the position and/or speed of the automatic movement means (5);
- synchronizing the swinging means (6) and the automatic movement means (5).

In an embodiment, the control means are configured for controlling the trajectory to be followed by the indenter (3), for example controlling the position and movement of the automatic movement means (5), for example by transforming a predefined trajectory into instructions of a software program used to control the robotic device (5).

In an embodiment, the control means are configured to control the means for adjusting the amplitude (A) of the swinging movement of the indenter (3). This can be achieved, for example, by the control means controlling the position of the shaft (6.4) relative to the rotation axis (RA) of the rotating element (6.3).

In an embodiment, the control means may comprise a computer system, e.g. formed by one or more processing units. The control by the control means can be exerted by software programming.

The present disclosure also provides embodiments of a method for the manufacture of veined artificial stone, the method comprising the following steps:
- dispensing a background mixture to create a background mixture layer (2) having a thickness;
- creating at least one cavity (4) in the background mixture layer (2), wherein the at least one cavity (4) extends through at least part of the thickness of the background mixture layer (2);
- dispensing a vein mixture into the at least one cavity (4); and
- compacting and hardening the combination of background mixture and vein mixture;
wherein the at least one cavity (4) is created by translating an indenter (3) following a trajectory while the indenter (3) is inserted in the background mixture layer (2), while the indenter (3) is simultaneously swung relative to a central position, such as in a direction substantially perpendicular to the thickness of the background mixture layer (2).

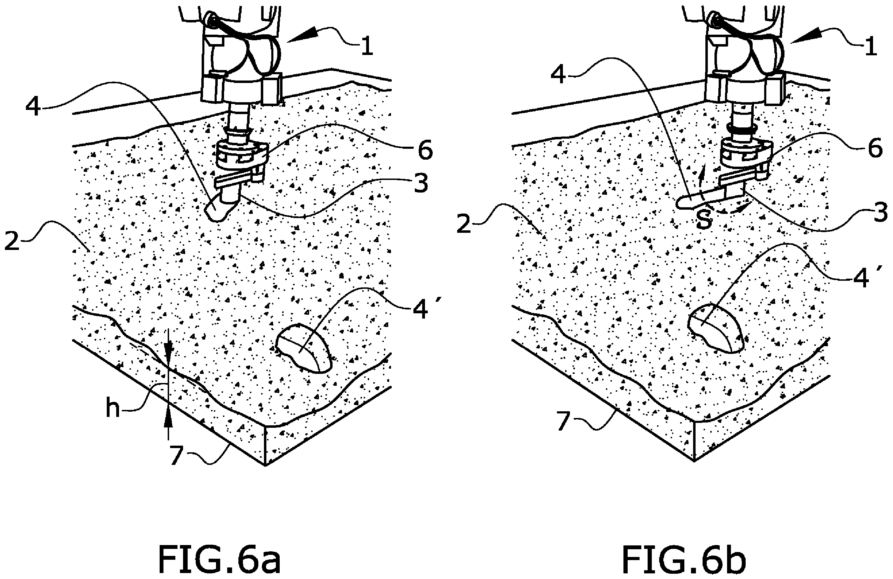

Figures 6a-6d depict different stages of the creation of at least one cavity (4) in the background mixture layer (2) according to an embodiment of the method of the present disclosure. In the stages shown in Figures 6a-6d the background mixture has already been dispensed.

In an embodiment, the background mixture is dispensed by a first dispenser over a substantially horizontal supporting surface (7), so as to create a background mixture layer (2). In an embodiment, the background mixture layer (2) has a thickness (h) that can vary from one to another point of the layer. Figure 6a shows the thickness (h) in one possible point of the layer. The dispensed background mixture layer has an average thickness, understood as the average of the thicknesses in at least five separated regions of the background mixture layer (2).

In an embodiment, the background mixture layer (2) has a shape of a slab corresponding to the shape of the artificial stone being manufactured, normally with some excess in its dimensions to compensate for the shrinkage that may be produced during compacting and hardening. In an embodiment, the length of the background mixture layer (2) is comprised in the range from 2 m to 3.5 m and/or its width is comprised in the range from 0.8 m to 2 m. In an embodiment, the average thickness of the background mixture layer (2) is comprised in the range from 10 mm to 200 mm or from 15 mm to 100 mm.

In an embodiment, the supporting surface (7) on which the background mixture layer (2) is dispensed is embodied by a sheet of kraft paper or plastic, which can be arranged on top of a conveyor or other part of a production line. In an embodiment, the supporting surface (7) is part of a temporary mold, for example the bottom of a tray-shaped mold, which is used to retain the background mixture layer (2) during the manufacturing of the artificial stone.

In an embodiment, the background mixture is prepared by mixing from 82 wt% to 95 wt% of a first particulate material and from 5 wt% to 18 wt% of a first binder, both in relation to the weight of the background mixture.

In an embodiment, the background mixture comprises different amounts of granulates and powders, having different particle sizes, of one or several of quartz, synthetic cristobalite, feldspar and silicate glass.

In an embodiment, the first binder comprises a liquid translucent unsaturated polyester resin.

In an embodiment, the background mixture comprises from 0.5 wt% to 3.0 wt% of a first colorant mixture and/or additives comprising one or more of coupling agents, catalysts, accelerants, among others.

With reference to Figures 6a-6d, a cavity (4), such as a groove, furrow, or trench, is created extending at least through part of the thickness (h) of the background mixture layer (2). In the method according to the present disclosure, the at least one cavity (4) is created by translating an indenter (3) following a trajectory while it is inserted into the background mixture layer (2), while the indenter (3) is simultaneously swung relative to a central position in a direction substantially perpendicular to the thickness (h) of the background mixture layer (2).

The at least one cavity (4) will be created having a shape and following a trajectory that corresponds, with some variation due to the processes downstream in the method of manufacture, to the shape and trajectory of the vein, or veined effect, to be achieved in the artificial stone. In this context, a vein is understood as an elongated line or band that is visually distinguishable from a background.

In an embodiment, more than one cavity (4) is created in the background mixture, such as 2 - 20 cavities (4), intersecting or not, forming complex or simple patterns.

Figure 6a shows a first cavity (4) already created in the background mixture layer (2) and the indenter (3) positioned over the background mixture layer (2) to initiate the creation of a second cavity (4'). Figure 6b shows the indenter (3) inserted into the background mixture layer (2). The second cavity (4') is created by translating the indenter (3) following a trajectory while inserted into the background mixture layer (2). Also, the indenter (3) is simultaneously swung in a direction (S) substantially perpendicular to the thickness of the background mixture layer (2).

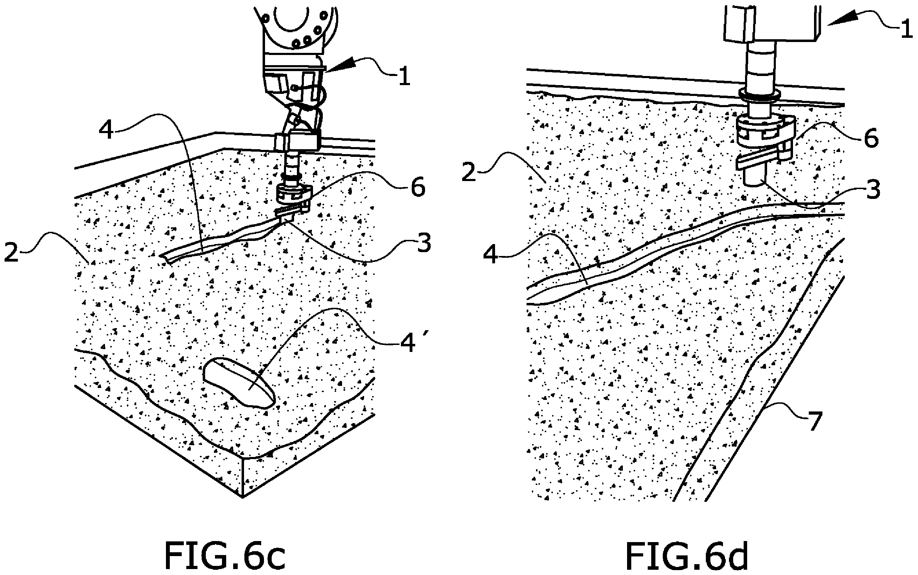

Figure 6c shows the creation of the second cavity (4') by means of the translation of the indenter (3) inserted into the background mixture layer (2) following the desired trajectory. Figure 6d shows a stage where creation of the second cavity (4') is finished and the indenter (3) has been extracted from the background mixture layer (2). By moving the indenter (3) to another position over the background mixture layer (2) and repeating the process illustrated in Figures 6a-6d, additional cavities may be formed corresponding to the pattern of veins desired for the artificial stone.

In the method according to the third aspect of the present disclosure, a vein mixture is dispensed into the at least one cavity (4) created. In an embodiment, this is done by a vein mixture dispenser (not shown). The vein mixture dispenser can be configured as a dispenser mounted on a robotic device (e.g. different than the robotic device (5) for moving the indenter (3)). The vein mixture device can be configured, for example, as those disclosed in WO 2019101823 A1. The vein mixture may be dispensed by the vein mixture dispenser in controlled variable amounts along the cavity (4).

The components of the background mixture and the vein mixture can be selected so that they are different (such as having different composition and/or different particulate material particle size distribution), and/or they can visually distinguishable after hardening.

In an embodiment, the vein mixture is previously prepared in a mixer by combining from 85 to 95 wt% of a second particulate material and from 5 to 15 wt% of a second binder, both based on the weight of the vein mixture.

In an embodiment, the second particulate material comprises different amounts of granulates and powders, having different particle sizes, of one or several of quartz, synthetic cristobalite, feldspar and recycled silicate glass.

In an embodiment, the second binder comprises a liquid translucent unsaturated polyester resin.

In an embodiment, the vein mixture also comprises from 0.5 wt% to 3.0 wt% of a second colorant mixture and/or additives comprising coupling agents, catalysts, accelerants, among others, based on the weight of the vein mixture.

Once the vein mixture is dispensed, the combination of the background and vein mixtures is compacted and hardened.

In an embodiment, the combination of background and vein mixtures is covered with a protective sheet on the exposed upper side, e.g., with a sheet of Kraft paper, before it is transferred to a compaction station.

In an embodiment, the compaction station comprises a vacuum vibrocompaction press, where the air in the combination of background and vein mixtures is evacuated with simultaneous pressing under vibration.

In an embodiment, the combination of background and vein mixtures is conveyed inside a compaction zone of a compaction press, wherein it is introduced into a sealable chamber. This chamber is then sealed and vacuum is created with suitable exhaust pumps. Once the desired vacuum level (e.g., from 5 mbar to 40 mbar) is reached, the press ram exerts a compaction pressure simultaneously with the application of a vertical vibration of the ram (e.g., oscillating at from 2.000 Hz to 4.000 Hz). During vacuum vibrocompaction, the air trapped in background and vein mixtures is substantially evacuated.

After compaction, in an embodiment, the compacted combination of background and vein mixtures is transferred to a hardening station where it is hardened or cured in a kiln for about 40 to 60 minutes at a temperature comprised from 70 to 110°C. However, other types of hardening and curing are possible and within the aspects of the present disclosure, such as hardening by application of radiation, such as UV-radiation. After hardening, the artificial stone, e.g. in form of a slab, is obtained comprising a combination of hardened background mixture and hardened vein mixture.

In an embodiment, the obtained artificial stone is allowed to cool down after the hardening stage. After hardening and given the case, cooling, the artificial stone, it may be calibrated, cut and/or trimmed to the desired final dimensions. Further, one or both of the two major surfaces of the artificial stone may be finished, such as polished, honed, and/or brushed, to enhance the appreciation of the veined effects created.

In an embodiment, the step of creating the at least one cavity (4) is performed with the system (1) according to any of the embodiments of the first aspect of the disclosure.

According to certain embodiments of the different aspects of the disclosure, and as shown in Figure 3, the indenter (3) is swung repeatedly relative to a central position (x0), creating the cavity (4). In other words, this swinging movement occurs along a curved direction (S), which describes an arc of a circle, as shown in Figure 3.

The swinging movement of the indenter (3) according to the present disclosure shall be understood to include also a reciprocating translational movement in a straight line from the most extreme positions (x1) to (x2) and vice versa, passing through a central position (x0).

The swinging movement of the indenter (3) defines a frequency and an amplitude (A). The amplitude (A) shall be understood as the distance along the swinging direction (S) between the free ends (3.3, 3.4) of the indenter (3) in its most extreme positions (x1, x2) during the swinging movement, as shown in Figure 3. In an embodiment, the amplitude (A) is comprised in the range 20-100 mm, or 30-80 mm. The amplitude (A) of the swinging movement may be varied for achieving vein effects wider or thinner, as desired. In some embodiments, the amplitude (A) of the swinging movement is varied while the cavity (4) is being created, thus creating a vein effect with different widths along its length.

The frequency of the swinging movement of the indenter (3) shall be understood as the number of cycles of the indenter (3) in its swinging movement per unit of time. A cycle is completed when the indenter (3) moves from the central position (x0) forth to one extreme position (x1) and back to the opposed extreme position (x2), and then returns to the central position (x0). In an embodiment, the frequency is comprised in the range from 2 s⁻¹ to 10 s⁻¹, when creating at least part of the cavity (4).

In an embodiment, the indenter (3) is swung repeatedly with a substantially constant frequency while creating at least part of the cavity (4).

The swinging movement of the indenter (11), as it is translated to follow the desired trajectory (for example moved by automatic movement means (5)), creates the cavity (4) in the background mixture layer (2) by displacing the mixture mainly to the sides of the central axis of the cavity (4) (instead of predominantly pushing it up and over the background mixture layer). This can be used to compact the background mixture into the walls of the cavity created, making the walls more stable and less prone to crumbling before or while the vein mixture is filled in, and improving the appearance of the veined effect created in the artificial stone.

The aspects of the disclosure also encompass a plant for the manufacture of veined artificial stone comprising at least one system (1) according to any of the embodiments herein. The plant (not shown) is particularly suitable for implementing the embodiments of the method object of this disclosure.

In an embodiment, the plant according to this aspect comprises the system (1) for the manufacture of veined artificial stone, a background mixture dispenser, a vein mixture dispenser (e.g. mounted on a robotic device), a compacting press (such as a vacuum vibrocompacting press), and a hardening kiln. The plant may optionally also include calibrating, trimming, polishing, honing and/or brushing devices for providing a finish to the artificial stone.

In an embodiment, the method of the present disclosure is performed with the plant according to any of the embodiments of the third aspect of the disclosure.

## Claims

1. A system (1) for the manufacture of veined artificial stone from a background mixture layer (2), the system (1) comprising:
- an indenter (3) for creating at least one cavity (4) in the background mixture layer (2), wherein the at least one cavity (4) extends through at least part of the thickness (h) of the background mixture layer (2),
- automatic movement means (5) for translating the indenter (3) following a trajectory while the indenter (3) is inserted in the background mixture layer (2), and
- swinging means (6) for swinging the indenter (3) relative to a central position in a predetermined direction.

2. The system (1) according to claim 1, wherein the system (1) further comprises a rotor (6.1) and wherein the swinging means (6) comprise conversion means connected to the rotor (6.1) and to the indenter (3), wherein the conversion means are configured for converting a rotational movement of the rotor (6.1) into a swinging movement of the indenter (3).

3. The system (1) according to claim 2, wherein the conversion means comprise:
- a rotating element (6.3) comprising a shaft (6.4), wherein the rotating element is configured to fix a first end of the shaft (6.4) in a part of the rotating element (6.3) that is spaced from the rotation axis (RA) of the rotating element (6.3), wherein the rotating element (6.3) is connected to the rotor (6.1) so that when the rotor (6.1) rotates, this rotation is transmitted to the rotating element (6.3), that rotates around its rotation axis (RA) and in turn generates a circular translation of the shaft (6.4);
- a connecting rod (6.5) comprising a slot (6.5.1), wherein the slot (6.5.1) is configured to receive a second end of the shaft (6.4) of the rotating element (6.3) opposite to the first end.

4. The system (1) according to claim 3, wherein the slot (6.5.1) of the connecting rod (6.5) is configured with an elongated shape, so that the circular translation of the shaft (6.4) generates a swinging movement of the connecting rod (6.5).

5. The system (1) according to any of claims 2 to 4, wherein the conversion means further comprise intermediate means for transferring the swinging movement of the connecting rod (6.5) to the indenter (3), the intermediate means comprising:
- a transfer shaft (6.6) connected to the connecting rod (6.5) and adapted to rotate with respect to its longitudinal axis in an oscillating movement when the rotating element (6.3) rotates, and
- a holding rod (6.7) extending from at least a first part (6.7.1) to a second part (6.7.2) of the holding rod (6.7), wherein the holding rod (6.7) is connected to an end of the transfer shaft (6.6) by the first part (6.7.1) of the holding rod (6.7), wherein the second part (6.7.2) of the holding rod (6.7) is adapted to fix the indenter (3), wherein the holding rod (6.7) is adapted to have a swinging movement that follows the swinging movement of the connecting rod (6.5) when the rotating element (6.3) rotates.

6. The system (1) according to any of the previous claims, further comprising control means configured for controlling the swinging means (6) and/or the automatic movement means (5).

7. The system (1) according to the previous claim, wherein the control means are configured for any one of the following, or any combination of two or more of the following:
- controlling the activation and/or deactivation of the swinging means (6);
- controlling the speed of the swinging means (6);
- controlling the frequency and/or amplitude of the swinging means;
- controlling the position and/or speed of the automatic movement means (5);
- synchronizing the swinging means (6) and the automatic movement means (5).

8. The system (1) according to any of claims 6 or 7, wherein the control means are configured for controlling the automatic movement means (5) such that the indenter (3) follows a predetermined trajectory.

9. The system (1) according to any of the previous claims, wherein the indenter (3) has a first end portion (3.1) intended to be inserted first into the background mixture layer (2), wherein the first end portion (3.1) has the smallest thickness compared to other portions of the indenter (3).

10. The system (1) according to any of the previous claims, further comprising means for adjusting the amplitude of the swinging movement of the indenter (3).

11. The system (1) according to claim 10 and any of claims 3 to 5, wherein the means for adjusting the amplitude of the swinging movement of the indenter (3) comprise a mechanism configured for adjusting the position of the shaft (6.4) of the rotating element (6.3) relative to the rotation axis (RA) of the rotating element (6.3), and a blocking element configured for blocking the position of the shaft (6.4).

12. The system (1) according to any of claims 2 to 11, further comprising coupling means adapted to couple the indenter (3) to the automatic movement means (5) and also adapted to allow the transmission of the rotation from the rotor (6.1) to the conversion means.

13. A plant for the manufacture of veined artificial stone comprising at least one system (1) according to any of the previous claims.

14. A method for the manufacture of veined artificial stone, the method comprising the following steps:
- dispensing a background mixture to create a background mixture layer (2) having a thickness (h);
- creating at least one cavity (4) in the background mixture layer (2), wherein the at least one cavity (4) extends through at least part of the thickness (h) of the background mixture layer (2);
- dispensing a vein mixture into the at least one cavity (4); and
- compacting and hardening the combination of background mixture and vein mixture;
wherein the at least one cavity (4) is created by translating an indenter (3) following a trajectory while the indenter (3) is inserted in the background mixture layer (2), while the indenter (3) is simultaneously swung relative to a central position (x0) in a direction substantially perpendicular to the thickness of the background mixture layer (2).

15. The method according to claim 14, wherein the indenter (3) is swung:
- repeatedly with a substantially constant frequency while creating at least part of the cavity (4), wherein optionally the frequency is in the range from 2 s⁻¹ to 10 s⁻¹; and/or
- with an amplitude in the range from 20 mm to 100 mm, or from 30 mm to 80 mm, while creating at least part of the cavity (4).
